# FASCICULE DE BREVET EUROPEEN

(11) **EP 3 099 577 B1**
(45) Date de publication et mention de la délivrance du brevet: **16.05.2018**
(21) Numéro de dépôt: 15704063.5
(22) Date de dépôt: 22.01.2015
(51) Int. Cl.: F02K 9/60, B64G 5/00

(54) **SYSTÈME D'ALIMENTATION AMÉLIORÉ EN ERGOL POUR UN VÉHICULE SPATIAL**
VERBESSERTES BETANKUNGSSYSTEM FÜR EIN RAUMFAHRZEUG
IMPROVED FUELLING SYSTEM FOR A SPACECRAFT

(30) Priorité: 29.01.2014 FR 1400227
(43) Date de publication de la demande: 07.12.2016
(73) Titulaire: Safran Aircraft Engines, 75015 Paris (FR)
(72) Inventeur: YHUELLOU, Olivier, F-27950 St Marcel (FR); VERDIER, Georges, F-27510 Tourny (FR); ADAM, Olivier, F-27920 St Pierre de Bailleul (FR)
(74) Mandataire: Gilbey, Vincent
(86) Numéro de dépôt international: PCT/FR2015/050157
(87) Numéro de publication internationale: WO 2015/114238

(56) Documents cités:
- FR-A1- 2 943 626

## Description

### DOMAINE TECHNIQUE GENERAL

La présente invention concerne le domaine des systèmes d'avitaillement en ergol d'un engin spatial, et trouve une application notamment pour des propulseurs cryogéniques ou non cryogéniques d'un lanceur.

### ETAT DE L'ART

L'avitaillement en ergol d'un engin spatial tel qu'une fusée doit être réalisé au plus près possible du décollage, afin de limiter au maximum la durée de stockage de l'ergol dans les réservoirs de la fusée.
Cependant, les dispositifs existants pour l'alimentation en ergol des réservoirs d'un engin spatial, cf. FR 2 943 626, créent des pertes de charge importantes, qui réduisent considérablement le débit de remplissage des réservoirs et allongent considérablement la durée de remplissage, augmentant de ce fait la durée de stockage de l'ergol dans les réservoirs de l'engin spatial.

De plus, l'utilisation d'un ergol cryogénique rend problématique l'utilisation de certaines technologies, notamment l'utilisation d'actionneurs électromagnétiques, qui ne sont pas compatibles avec des telles températures par exemple de l'ordre de -253°C.

Enfin, la modification de composants sur un engin spatial est problématique, en ce qu'elle implique la réalisation de nombreux essais, complexes et longs à réaliser. Les modifications côté bord, c'est-à-dire au niveau de la structure de l'engin spatial sont donc à éviter.

### PRESENTATION DE L'INVENTION

Afin de répondre au moins partiellement à ces diverses problématiques, la présente invention propose un système d'alimentation en ergol d'un véhicule spatial, comprenant
- un dispositif bord comprenant
   - un châssis présentant un orifice d'alimentation menant à un réservoir bord,
   - une soupape adaptée pour sélectivement obturer ou ouvrir ledit orifice d'alimentation,
- un dispositif sol comprenant
   - un conduit d'alimentation présentant une extrémité libre,
   - un corps de vannage muni d'un actionneur,
le dispositif bord et le dispositif sol étant configurés de manière à pouvoir être associés afin de, dans une configuration ouverte, permettre un transfert d'ergol du conduit d'alimentation vers le réservoir bord, et dans une configuration fermée, isoler le réservoir bord du conduit d'alimentation, l'actionneur étant configuré de manière à piloter l'ouverture et l'obturation de l'orifice d'alimentation par la soupape,
le système étant caractérisé en ce que le corps de vannage entoure ladite extrémité libre du conduit d'alimentation et ledit actionneur entoure la périphérie externe du conduit d'alimentation.
La présente invention propose ainsi un système d'alimentation en ergol pour un engin spatial dans lequel les pertes de charge au niveau de la jonction entre l'engin spatial et les équipements au sol sont minimisées, et le temps de remplissage du réservoir de l'engin spatial est ainsi fortement réduit. De plus, les dimensions du clapet sont réduites, contribuant de ce fait à une réduction de la masse embarquée.
Le système proposé peut en outre être utilisé sur des engins spatiaux existants, sans nécessiter de modification sur l'engin spatial lui-même. Enfin, le système proposé est compatible avec un ergol cryogénique.
Selon un mode de réalisation particulier, le dispositif sol comprend une structure de lancement comprenant un réservoir sol auquel est relié le conduit d'alimentation, la structure de lancement comprenant en outre un obturateur adapté pour,
- dans une configuration d'alimentation, relier ledit conduit d'alimentation au réservoir sol,
- dans une configuration d'obturation, isoler le conduit d'alimentation du réservoir sol.
La structure de lancement comprend alors typiquement en outre un système de vidange adapté pour réaliser une purge du conduit d'alimentation de sorte que lors de l'application d'une commande, ledit système de vidange aspire l'ergol contenu dans le conduit d'alimentation et le stocke dans un réservoir de la base.
Le système d'alimentation en ergol peut alors comprendre en outre des moyens de détection de fuites adaptés pour réaliser des tests d'étanchéité dans ledit conduit d'alimentation lorsque la soupape obture l'orifice d'alimentation.

L'actionneur est typiquement couplé à un moyen de rappel élastique exerçant un effort de poussée sur l'actionneur tendant à le déplacer vers la configuration ouverte dans laquelle l'actionneur ouvre la soupape.
Le système comprend alors avantageusement une commande, par exemple pneumatique, adaptée pour exercer un effort sur l'actionneur s'opposant à l'effort de poussée appliquée par le moyen de rappel élastique, de manière à tendre à déplacer l'actionneur vers la configuration fermée.

A l'inverse, l'actionneur peut être couplé à un moyen de rappel élastique exerçant un effort de poussée sur l'actionneur tendant à le déplacer vers la configuration fermée dans laquelle l'actionneur ferme la soupape.
Le système comprend alors avantageusement une commande, par exemple pneumatique, adaptée pour exercer un effort sur l'actionneur s'opposant à l'effort de poussée appliquée par le moyen de rappel élastique, de manière à tendre à déplacer l'actionneur vers la configuration ouverte.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un système d'alimentation en ergol selon un aspect de l'invention dans une configuration d'alimentation,
- La figure 2 présente le système de la figure 1 dans une configuration fermée.

Sur l'ensemble des figures, les éléments en commun sont repérés par des références numériques identiques.

### DESCRIPTION DETAILLEE

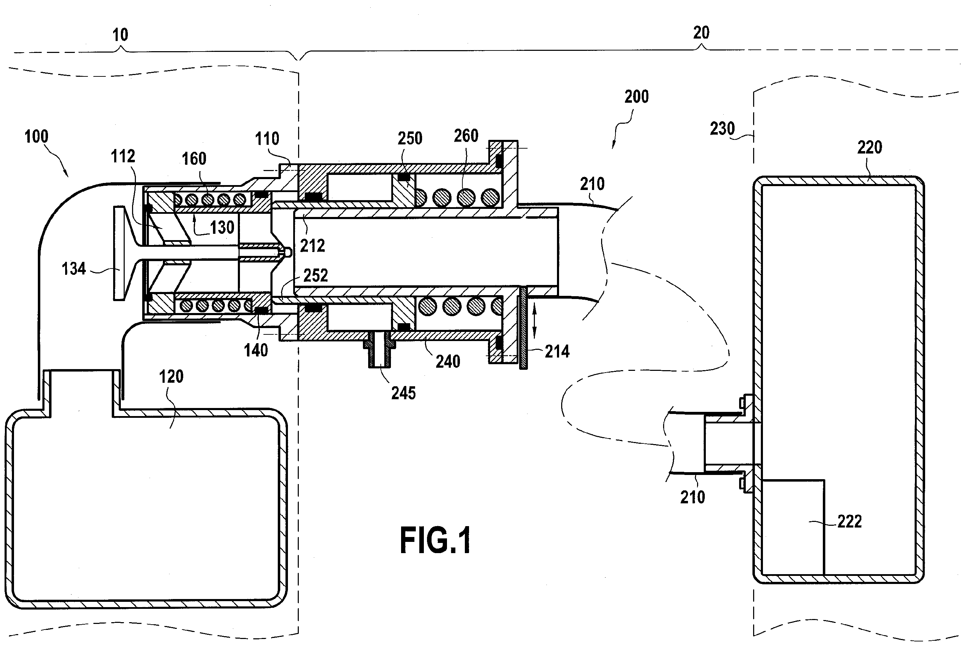

La figure 1 représente un système d'alimentation en ergol selon un aspect de l'invention dans une configuration d'alimentation.

On repère sur cette figure un côté bord 10 et un côté sol 20, correspondant respectivement à des équipements embarqués sur un engin spatial, et à des équipements montés au sol.

Le système d'alimentation représenté sur la figure 1 comprend ainsi des équipements côté bord 10, et des équipements côté sol 20.

Plus précisément, le système illustré comprend côté bord 10 un dispositif bord 100 comprenant :
- un châssis 110 présentant un orifice d'alimentation 112 relié à un réservoir bord 120 ;
- une soupape 134 montée coulissante et couplée à un guide de soupape 130, adaptée pour sélectivement obturer ou non l'orifice d'alimentation 112 du châssis 110.

La soupape 134 est disposée de manière à, en fonction de son déplacement dans le guide de soupape 130, obturer ou non l'orifice d'alimentation 112.
Un élément de guidage 140 est avantageusement positionné entre le guide de soupape 130 et le châssis 110.
Le guide de soupape 130 est couplé à un moyen de poussée 160 adapté pour, en l'absence d'application d'efforts additionnels, exercer un effort de poussée sur le guide de soupape 130 de manière à maintenir la soupape 134 en position d'obturation de l'orifice d'alimentation 112.

Du côté sol 20, on représente sur la figure 1 un dispositif sol 200 comprenant :
- un conduit d'alimentation 210 présentant une extrémité libre 212,
- un réservoir sol 220 monté dans une structure de lancement 230.
Le conduit d'alimentation est équipé d'un corps de vannage 240 disposé de manière à entourer l'extrémité libre 212, et à permettre sa fixation au châssis 110.
Le corps de vannage 240 est équipé d'un actionneur 250 monté coulissant autour de l'extrémité libre 212, sur la périphérie externe du conduit d'alimentation 210. L'actionneur 250 est couplé à un moyen de rappel élastique 260, ici un ressort de poussée, exerçant un effort de poussée sur l'actionneur 250 tendant à le déplacer de sorte qu'une extrémité libre 252 de l'actionneur 250 s'étende au-delà de l'extrémité libre 212 du conduit d'alimentation 210.
Le corps de vannage 240 tel que présenté comprend également un orifice de commande 245, adapté pour permettre l'application d'une pression de commande sur l'actionneur 250 s'opposant à l'effort de poussée exercé par le moyen de rappel élastique 260, et permettant ainsi de déplacer l'actionneur 250 de manière à ramener son extrémité libre 252 vers l'extrémité libre 212 du conduit d'alimentation 210.

Lorsque le dispositif bord 100 et le dispositif sol 200 sont associés, l'extrémité libre 212 du conduit d'alimentation 210 est disposés en regard de l'orifice d'alimentation 112 du châssis 110.
L'actionneur 250 est donc également disposé en regard de l'orifice d'alimentation 112 du châssis 110. L'actionneur 250 est configuré de manière à ce que lorsque le dispositif bord 100 et le dispositif sol 200 sont ainsi associés, l'extrémité libre 252 de l'actionneur 250 vienne au contact de l'équipage mobile 130, avantageusement sensiblement à la périphérie externe de l'équipage mobile 130.

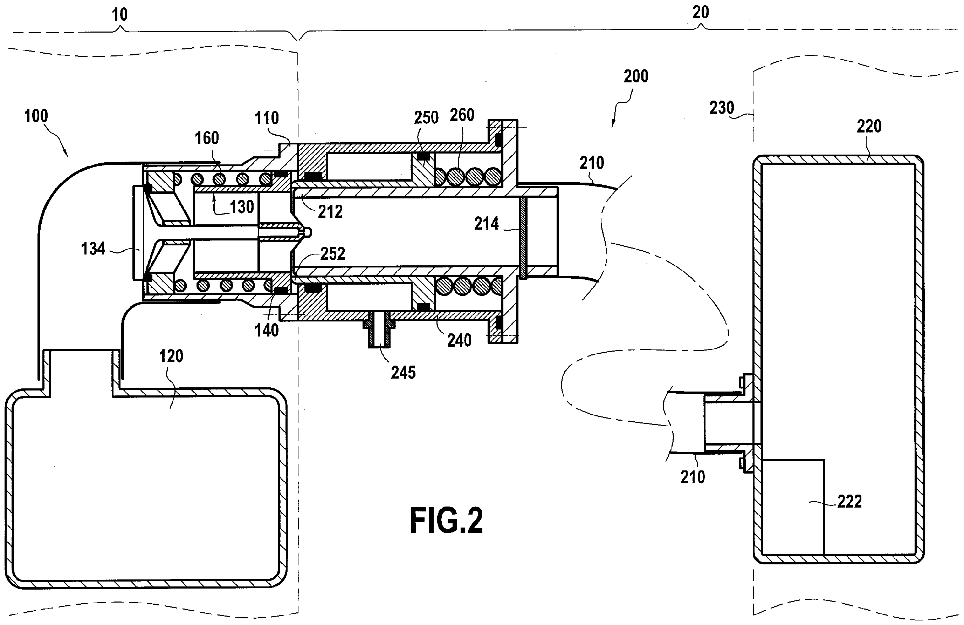

L'actionneur 250 peut ainsi piloter le déplacement de la soupape 130, et donc l'ouverture ou non de l'orifice d'alimentation 112, par exemple en déplaçant le guide de soupape 130 de sorte que la soupape 134 obture ou non des canaux d'alimentation aménagés à proximité de l'orifice d'alimentation 112.
Le moyen de rappel élastique 260 tel que présenté exerce un effort de poussée sur l'actionneur 250 tendant à déplacer le guide de soupape 130 afin que la soupape 134 ouvre l'orifice d'alimentation 112 et ainsi permettre le passage de fluide du conduit d'alimentation 210 vers le réservoir bord 120.
A l'inverse, l'application d'une pression de commande via l'orifice de commande 245 permet de piloter l'actionneur 250 de manière à réduire voire annuler l'effort de poussée qu'il exerce que la soupape 130 ; la soupape 130 est alors ramenée dans une configuration fermée par le moyen de poussée 160, dans laquelle la soupape 134 obture l'orifice d'alimentation 112, comme représenté sur la figure 2.

Le pilotage de l'ouverture ou de la fermeture de l'orifice d'alimentation 112 peut donc être effectué au moyen d'un pilotage en pression appliquée via l'orifice de commande 245.
Dans le mode de réalisation représenté, en l'absence de pression de commande appliquée via l'orifice de commande 245, l'actionneur 250 subit un effort de poussée exercé par le moyen de rappel élastique 260 tendant à ouvrir l'orifice d'alimentation 112 ; on réalise donc ici un pilotage de de l'ouverture de l'orifice d'alimentation 112.
Une configuration inversée peut également être réalisée, dans laquelle on réalise un pilotage de la fermeture de l'orifice d'alimentation 112. Le moyen de rappel élastique est alors configuré de manière à exercer un effort tendant à déplacer l'actionneur 250 de manière à annuler ou à tout le moins à minimiser l'effort qu'il applique sur le guide de soupape 130, la soupape 134 obturant donc l'orifice d'alimentation 112 en l'absence de pression appliquée via l'orifice de commande 245.

Le conduit d'alimentation 210 est relié au réservoir sol 220, qui est associé à un système de transfert 222 comprenant typiquement une pompe, configuré de manière à permettre de transférer du fluide, tel que de l'ergol, du réservoir sol 220 vers le réservoir bord 120 par l'intermédiaire du conduit d'alimentation 210 et de l'orifice d'alimentation 112.

Un obturateur 214 est également positionné à proximité de l'extrémité libre 212 du conduit d'alimentation 210, adapté pour, dans une configuration d'obturation, obturer le conduit d'alimentation 210, et dans une configuration d'alimentation, permettre un transfert de fluide du réservoir sol 220 vers le réservoir bord 120. L'obturateur 214 est représenté en configuration d'alimentation sur la figure 1 et en configuration d'obturation sur la figure 2.

On décrit ensuite un exemple de fonctionnement du système présenté.

On considère une configuration initiale dans laquelle le dispositif bord 100 et le dispositif sol 200 sont joints. L'obturateur 214 est fermé, de même que la soupape 134. Le réservoir bord 120 et le réservoir sol 220 sont ainsi isolés l'un par rapport à l'autre.

Le dispositif bord 100 et le dispositif sol 200 sont associés, comme représenté sur la figure 1. L'orifice d'admission 112 est ouvert par l'actionneur 250.
L'obturateur 214 est ouvert, et le système de transfert 222 est mis en fonctionnement de manière à remplir le réservoir bord 120 de fluide contenu dans le réservoir sol 220.
Une fois le réservoir bord 120 rempli au niveau souhaité, le remplissage cesse. L'actionneur 250 est piloté de manière à ne plus exercer un effort d'ouverture sur le guide de soupape 130 de la soupape 134, le corps de soupape 134 obturant ainsi l'orifice d'alimentation 112 de sorte que le réservoir bord 120 soit isolé du conduit d'alimentation 210. Le système de transfert 222 cesse d'envoyer du fluide du réservoir sol 220 vers le conduit d'alimentation 210.

Le conduit d'alimentation 210 est alors rempli de fluide. Afin d'éviter que ce fluide ne se déverse lorsque le dispositif bord 100 et le dispositif sol 200 se séparent, on vidange le conduit d'alimentation 210 de manière à purger le fluide s'y trouvant, puis l'obturateur 214 est fermé. La vidange du conduit d'alimentation est typiquement réalisée au moyen d'un système de vidange, pouvant par exemple mettre sous pression le conduit d'alimentation 210.
Des tests d'étanchéité peuvent alors être réalisés dans le conduit d'alimentation 210, permettant notamment de vérifier l'étanchéité de la soupape 134.

Une fois les tests effectués, l'engin spatial peut décoller, le dispositif bord 100 et le dispositif sol 200 sont alors séparés.

Le système proposé présente ainsi plusieurs avantages.
En premier lieu, le positionnement de l'actionneur 250 sur la périphérie externe du conduit d'alimentation 210 et non pas au sein du conduit d'alimentation 210 permet de limiter la présence de composants disposés dans le conduit d'alimentation 210, et donc de limiter les perturbations de l'écoulement de fluide dans le conduit d'alimentation 210. Les pertes de charge sont ainsi limitées, le débit peut être augmenté et donc le remplissage du réservoir bord 120 peut être accéléré pour un diamètre de soupape 134 côté bord réduit.
Le positionnement de l'actionneur 250 en périphérie externe du condit d'alimentation 210 et le déport sur l'extérieur des conduits des éléments de pilotage de l'actionneur 250 permet également d'avoir un conduit d'alimentation aligné avec l'orifice d'alimentation 112, ce qui est avantageux en terme de réduction des pertes de charge.

La structure proposée d'actionneur 250 et de système de pilotage de l'actionneur est de plus compatible avec des ergols cryogéniques tels que couramment utilisés pour les engins spatiaux qui atteignent des températures de l'ordre de -253°C, et sont donc incompatibles avec certains type d'actionneurs tels que les actionneurs magnétiques.

Enfin, le dispositif sol 200 présenté peut être employé sans nécessiter de modifications structurelles au niveau du dispositif bord 100. Seules les dimensions du conduit d'alimentation 210 et de l'actionneur 250 jouent un rôle dans l'actionnement de la soupape 134. Le dispositif sol 200 proposé peut ainsi être associé à des dispositifs bord 100 existants.

## Revendications

1. Système d'alimentation en ergol d'un véhicule spatial, comprenant
- un dispositif bord (100) comprenant
• un châssis (110) présentant un orifice d'alimentation (112) menant à un réservoir bord (120),
• une soupape (134) adaptée pour sélectivement obturer ou ouvrir ledit orifice d'alimentation (112),
- un dispositif sol (200) comprenant
• un conduit d'alimentation (210) présentant une extrémité libre (212),
• un corps de vannage (240) muni d'un actionneur (250),
le dispositif bord (100) et le dispositif sol (200) étant configurés de manière à pouvoir être associés afin de, dans une configuration ouverte, permettre un transfert d'ergol du conduit d'alimentation (210) vers le réservoir bord (120), et dans une configuration fermée, isoler le réservoir bord (120) du conduit d'alimentation (210), l'actionneur (250) étant configuré de manière à piloter l'ouverture et l'obturation de l'orifice d'alimentation (112) par la soupape (134),
le système étant **caractérisé en ce que** le corps de vannage (240) entoure ladite extrémité libre (212) du conduit d'alimentation (210) et **en ce que** ledit actionneur (250) entoure la périphérie externe du conduit d'alimentation (210).

2. Système selon la revendication 1, dans lequel le dispositif sol comprend une structure de lancement (230) comprenant un réservoir sol (220) auquel est relié le conduit d'alimentation (210), ledit système comprenant en outre un obturateur (214) adapté pour,
- dans une configuration d'alimentation, permettre un transfert d'ergol entre le réservoir sol (220) et le réservoir bord (120),
- dans une configuration d'obturation, isoler le réservoir bord (120) du réservoir sol (220).

3. Système selon la revendication 2, dans lequel ladite structure de lancement comprend en outre un système de vidange adapté pour réaliser une purge du conduit d'alimentation (210) de sorte que lors de l'application d'une commande, ledit système de transfert aspire l'ergol contenu dans le conduit d'alimentation (210) et le stocke dans un réservoir de la base.

4. Système selon l'une des revendications 2 ou 3, comprenant en outre des moyens de détection de fuites adaptés pour réaliser des tests d'étanchéité dans ledit conduit d'alimentation (210) lorsque la soupape (134) obture l'orifice d'alimentation (112).

5. Système selon l'une des revendications 1 à 4, dans lequel ledit actionneur (250) est couplé à un moyen de rappel élastique (260) exerçant un effort de poussée sur l'actionneur (250) tendant à le déplacer vers une configuration ouverte dans laquelle l'actionneur (250) ouvre la soupape (134).

6. Système selon la revendication 5, comprenant une commande (245) adaptée pour exercer un effort sur l'actionneur (250) s'opposant à l'effort de poussée appliquée par le moyen de rappel élastique (260), de manière à tendre à déplacer l'actionneur vers la configuration fermée.

7. Système selon l'une des revendications 1 à 4, dans lequel ledit actionneur (250) est couplé à un moyen de rappel élastique (260) exerçant un effort de poussée sur l'actionneur (250) tendant à le déplacer vers la configuration fermée dans laquelle l'actionneur (250) ferme la soupape (134) de sorte que la soupape (134) obture l'orifice d'alimentation (112).

8. Système selon la revendication 7, comprenant une commande (245) adaptée pour exercer un effort sur l'actionneur (250) s'opposant à l'effort de poussée appliquée par le moyen de rappel élastique (260), de manière à tendre à déplacer l'actionneur (250) vers la configuration ouverte dans laquelle la soupape (134) n'obture pas l'orifice d'alimentation (112).

9. Système selon l'une des revendications 6 ou 8, dans lequel ladite commande (245) est une commande pneumatique.

## Patentansprüche

1. System zur Versorgung eines Raumfahrzeugs mit Treibstoff für ein Raumfahrzeug, umfassend
- eine bordseitige Vorrichtung (100), umfassend
• ein Gestell (110) mit einer Zuführöffnung (112), die zu einem bordseitigen Tank (120) führt,
• ein Ventil (134), das dazu ausgelegt ist, die Zuführöffnung (112) wahlweise abzudichten oder zu öffnen,
- eine bodenseitige Vorrichtung (200), umfassend
• eine Zuführleitung (210) mit offenem Ende (212),
• einem Ventilkörper (240) mit einem Stellantrieb (250),
wobei die bordseitige Vorrichtung (100) und die bodenseitige Vorrichtung (200) so konfiguriert sind, dass sie miteinander kombiniert werden können, um in offener Konfiguration den Transfer von Treibstoff aus der Zuführleitung (210) in den bordseitigen Tank (120) zu ermöglichen und in geschlossener Konfiguration den bordseitigen Tank (120) von der Zuführleitung (210) zu isolieren, wobei der Stellantrieb (250) dazu ausgelegt ist, das Öffnen und Schließen der Zuführöffnung (112) durch das Ventil (134) zu steuern,
wobei das System **dadurch gekennzeichnet ist, dass** der Ventilkörper (240) das offene Ende (212) der Zuführleitung (210) umgibt und der Stellantrieb (250) den äußeren Umfang der Zuführleitung (210) umgibt.

2. System gemäß Anspruch 1, wobei die bodenseitige Vorrichtung einen Aufbau zum Starten (230) umfasst, der einen bodenseitigen Tank (220) aufweist, an den die Zuführleitung (210) angeschlossen ist, wobei das System ferner einen Verschluss (214) umfasst, der dazu ausgelegt ist,
- in einer Versorgungskonfiguration den Transfer von Treibstoff zwischen dem bodenseitigen Tank (220) und dem bordseitigen Tank (120) ermöglichen,
- und in einer Verschlusskonfiguration den bordseitigen Tank (120) von dem bodenseitigen Tank (220) zu isolieren.

3. System gemäß Anspruch 2, wobei der Aufbau zum Starten ferner ein Abführsystem umfasst, das dazu ausgelegt ist, eine Reinigung der Zuführleitung (210) durchzuführen, derart dass bei der Anwendung einer Steuerung das Transfersystem den in der Zuführleitung (210) enthaltenen Treibstoff ansaugt und in einem Grundtank speichert.

4. System gemäß einem der Ansprüche 2 oder 3, ferner umfassend Leckdetektionsmittel, die dazu ausgelegt sind, in der Zuführleitung (210) Dichtigkeitstests durchzuführen, wenn das Ventil (134) die Zuführöffnung (112) abdichtet.

5. System gemäß einem der Ansprüche 1 bis 4, wobei der Stellantrieb (250) mit einem elastischen Rückstellmittel (260) gekoppelt ist, das eine Schubkraft auf den Stellantrieb (250) ausübt, um ihn in eine offene Konfiguration zu bewegen, in der der Stellantrieb (250) das Ventil (134) öffnet.

6. System gemäß Anspruch 5, umfassend eine Steuerung (245), die dazu ausgelegt ist, eine Kraft auf den Stellantrieb (250) auszuüben, die dem Schub entgegengesetzt ist, der durch das elastische Rückstellmittel (260) ausgeübt wird, sodass der Stellantrieb in Richtung der geschlossenen Konfiguration bewegt wird.

7. System gemäß einem der Ansprüche 1 bis 4, wobei der Stellantrieb (250) mit einem elastischen Rückstellmittel (260) gekoppelt ist, das eine Schubkraft auf den Stellantrieb (250) ausübt, um ihn in die geschlossene Konfiguration zu bewegen, in der der Stellantrieb (250) das Ventil (134) schließt, sodass das Ventil (134) die Zuführöffnung (112) abdichtet.

8. System gemäß Anspruch 7, umfassend eine Steuerung (245), die dazu ausgelegt ist, eine Kraft auf den Stellantrieb (250) auszuüben, die dem Schub entgegengesetzt ist, der durch das elastische Rückstellmittel (260) ausgeübt wird, sodass der Stellantrieb (250) in Richtung der offenen Konfiguration bewegt wird, in der das Ventil (134) die Zuführöffnung (112) nicht abdichtet.

9. System gemäß einem der Ansprüche 6 oder 8, wobei die Steuerung (245) eine pneumatische Steuerung ist.

## Claims

1. A system for feeding a space vehicle with propellant, the system comprising:
• an on-board device (100) comprising:
• frame (110) having a feed orifice (112) leading to an on-board tank (120); and
• a valve (134) adapted to act selectively to shut or open said feed orifice (112);
• ground device (200) comprising:
• feed duct (210) having a free end (212); and
• control body (240) provided with an actuator (250);
the on-board device (100) and the ground device (200) being configured so as to be capable of being associated so that, in an open configuration, propellant can be transferred from the feed duct (210) to the on-board tank (120), and in a shut configuration, the on-board tank (120) can be isolated from the feed duct (210), the actuator (250) being configured so as to control the opening and shutting of the feed orifice (112) by the valve (134);
the system being **characterized in that** the control body (240) surrounds said free end (212) of the feed duct (210) and **in that** said actuator (250) surrounds the outer periphery of the feed duct (210).

2. A system according to claim 1, wherein the ground device comprises a launch structure (230) having a ground tank (220) to which the feed duct (210) is connected, said system further comprising a shutter (214) adapted:
• in a feed configuration, to enable propellant to be transferred between the ground tank (220) and the on-board tank (120); and
• in a shutting configuration, to isolate the on-board tank (120) from the ground tank (220).

3. A system according to claim 2, wherein said launch structure further comprises a drain system adapted to purge the feed duct (210) so that on application of a command, said transfer system sucks in the propellant contained in the feed duct (210) and stores it in a tank of the base.

4. A system according to claim 2 or claim 3, further including means for detecting leaks and adapted to perform leak testing in said feed duct (210) when the valve (134) shuts the feed orifice (112).

5. A system according to any one of claims 1 to 4, wherein said actuator (250) is coupled to resilient return means (260) exerting a thrust force on the actuator (250) tending to move it towards an open configuration in which the actuator (250) opens the valve (134).

6. A system according to claim 5, including a control (245) adapted to exert a force on the actuator (250) opposing the thrust force applied by the resilient return means (260) so as to tend to move the actuator towards the closed configuration.

7. A system according to any one of claims 1 to 4, wherein said actuator (250) is coupled to resilient return means (260) exerting a thrust force on the actuator (250) tending to move it towards the shut configuration in which the actuator (250) shuts the valve (134) so that the valve (134) shuts the feed orifice (112).

8. A system according to claim 7, including a control (245) adapted to exert a force on the actuator (250) opposing the thrust force applied by the resilient return means (260), so as to tend to move the actuator (250) towards the open configuration in which the valve (134) does not shut the feed orifice (112).

9. A system according to claim 6 or claim 8, wherein said control (245) is a pneumatic control.
